# EUROPÄISCHE PATENTSCHRIFT

(11) **EP 1 688 318 B1**
(45) Veröffentlichungstag und Bekanntmachung des Hinweises auf die Patenterteilung: **13.05.2009**
(21) Anmeldenummer: 05027257.4
(22) Anmeldetag: 14.12.2005
(51) Int. Cl.: B60R 21/13

(54) **Überrollschutzsystem für Kraftfahrzeuge mit einem Überrollkörper, dessen Bügelkopf U-förmig gerundet ist**
Roll over protection device for vehicles with a rollbar with a rounded, U-shaped frame head
Système d'arceau de sécurité pour véhicules avec un arceau arrondi en forme de U sur le haut

(30) Priorität: 02.02.2005 DE 102005004646
(43) Veröffentlichungstag der Anmeldung: 09.08.2006
(73) Patentinhaber: ISE Automotive GmbH, 51702 Bergneustadt (DE)
(72) Erfinder: Nowack, Reinhard, 57489 Drolshagen (DE); Röhner, Stephan, 44287 Dortmund (DE); Naß, Michael, 51702 Bergneustadt (DE)
(74) Vertreter: Fuchs

(56) Entgegenhaltungen:
- EP-A1- 0 976 620
- EP-B1- 0 788 932
- EP-B1- 0 904 991
- FR-A- 1 539 482
- US-B1- 6 179 327

## Beschreibung

Die Erfindung bezieht sich auf ein Überrollschutzsystem für Kraftfahrzeuge mit einem U-förmigen Überrollkörper, der insgesamt, d.h. im Bereich des Kopfes und der sich daran anschließenden Schenkel aus zwei etwa längs der Mittelebene des Überrollkörpers miteinander verbundenen geformten Blech-Halbschalen besteht.

Derartige Überrollschutzsysteme dienen zum Schutz der Insassen in Kraftfahrzeugen ohne schützendes Dach, typischerweise in Cabriolets oder Sportwagen bei einem Überschlag, da das Fahrzeug über den Überrollbügel abrollen wird.

U-förmige Überrollbügel werden meist aus einfachen Rohrbiegeteilen gefertigt, mit einem gerundeten Bügelkopf und zwei parallel zueinander verlaufenden Schenkeln. Ein derartiger U-förmiger Überrollbügel kann aus einem einstückigen Stahl- oder Aluminiumrohr U-förmig gebogen werden, oder er kann aus einem rohrförmigen und U-förmig gerundeten Bügelkopf, an den die Schenkelrohre angeschweißt sind, bestehen. Bei einem derartigen dreiteiligen Überrollbügel kann der Überrollkopf auch durch Verschrauben, Verkleben oder durch eine formschlüssige Verbindung mit den Schenkelrohren verbunden sein ( z.B. DE 202 15 276 U1). Der U-förmig gerundete Bügelkopf kann dann mit Vorteil aus einem anderen Material als das der Schenkelrohre sein.

U-förmige Überrollbügel, und insbesondere starre Überrollbügel, die permanent sichtbar im Fahrzeug angeordnet sind, unterliegen zunehmend Sicherheitstechnik und auch Design bedingten Forderungen. Hieraus resultieren Überrollbügel, die auf Grund von notwendiger Form, und notwendigem Verlauf und Querschnitt, nicht mehr als einfache Rohrbiegeteile zu fertigen sind. Diese Vorgaben verlangen einen dreidimensionalen Verlauf der Bügelkontur mit unregelmäßigem Querschnitt des Bügelkopfprofils. Bei der sicherheitstechnischen Gestaltung können starke Abrundungen und Verflachungen zur Kopfseite der PKW-Insassen verwirklicht werden, um durch eine insoweit mögliche stärkere Schaumauflage die Verletzungsschwere zu minimieren.

Ein Überrollschutzkörper der eingangs genannten Art ist aus der DE 298 07 322 U1 bekannt geworden. Derartige Blech-Halbschalen können - anders als einfache Rohrkonstruktionen - in vielfältiger Weise ästhetisch und festigkeitsmäßig an die jeweiligen Anforderungen angepasst werden. Sie können zur Mittelebene symmetrisch oder unterschiedlich geformt sein und es können zwischen den Halbschalen Versteifungen oder schalldämpfende Mittel eingebracht werden.

Davon ausgehend wird erfindungsgemäß vorgeschlagen, zur Befestigung des Überrollkörpers an der Karosserie ein Fußteil vorzusehen, das in gleicher Weise aus miteinander verbundenen geformten Blech-Halbschalen besteht.

Es wurde erkannt, dass auch bei der Gestaltung des Fußteils sehr unterschiedliche und oft gegenläufige Forderungen erfüllt werden müssen, um ein Überrollschutzsystem mit den jeweiligen Fahrzeugkarosserien zu verbinden. Mit der Schalenbauweise sind - wie beim U-förmigen Überrollkörper - auch beim Fußteil sehr flexible, einfache und materialsparende Konzeptionen möglich. Vorteilhafte Ausgestaltungen des Erfindungsgedankens sind in den Unteransprüchen 2 bis 8 beschrieben.

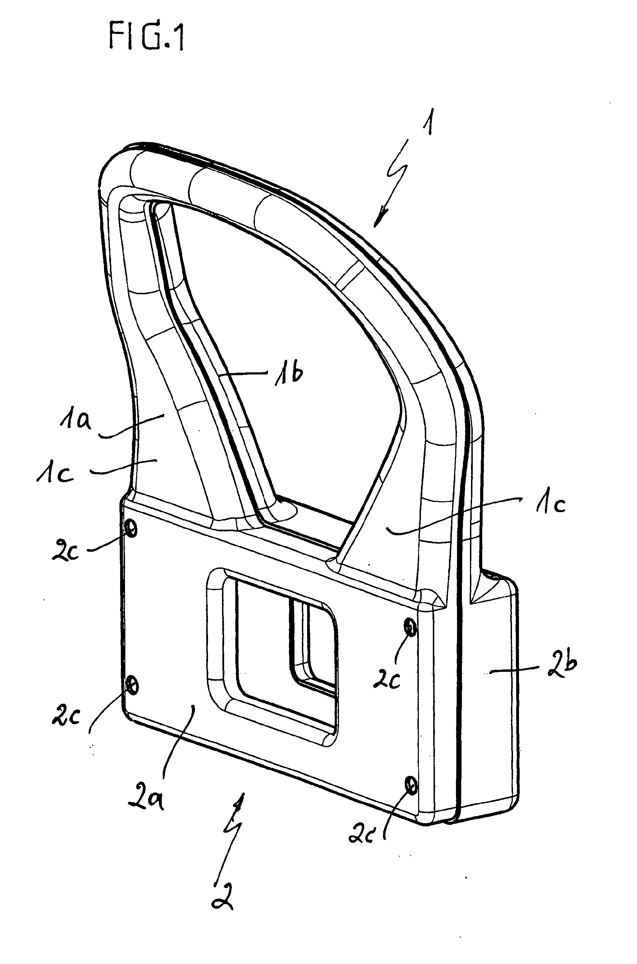

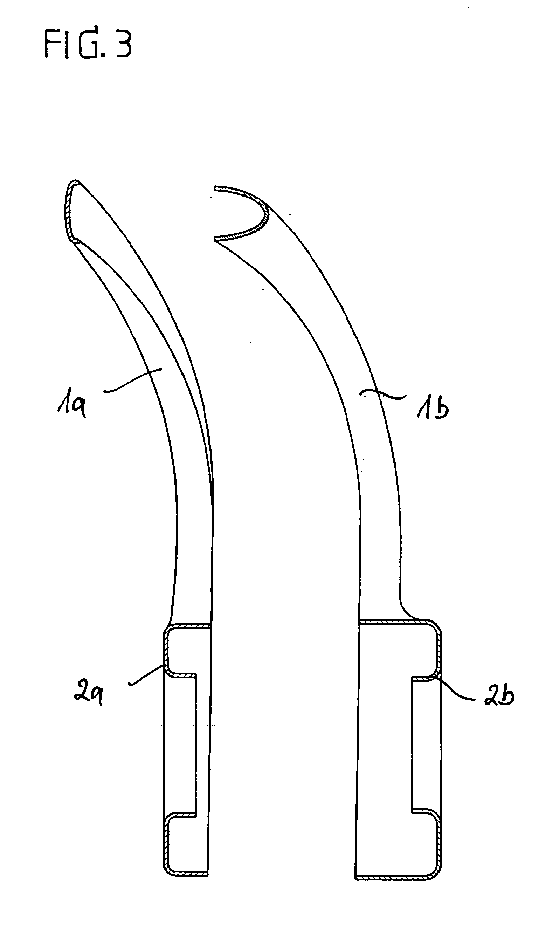

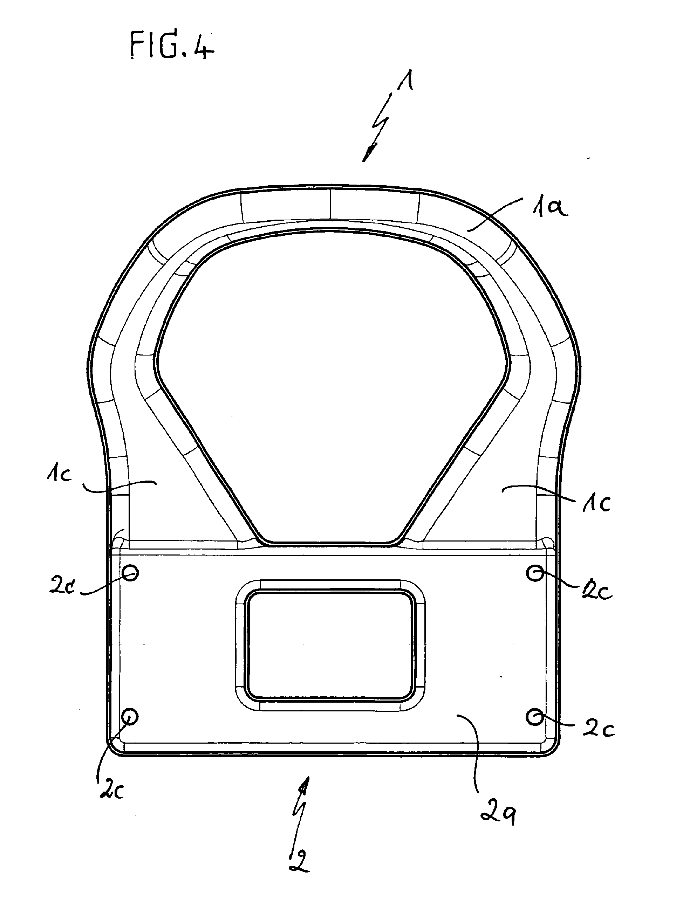

Weitere Einzelheiten werden anhand der in den Figuren 1 bis 9 dargestellten Ausführungsbeispiele näher erläutert.

Durch die erfindungsgemäße Maßnahme des Aufbaues von rohrförmig ausgebildeten und dabei U-förmig gerundeten Überrollbügeln bzw. entsprechend ausgebildeten Überrollköpfen von Überrollkörpern mittels teilrohrförmigen Schalen aus einem metallischem Blechwerkstoff, ist es möglich, mit den bekannten Warm- und Kaltverformungstechniken jede einzelne Schale entsprechend den vorgenannten Forderungen und Vorgaben individuell zu verformen.

Der mehrteilige Aufbau von Komponenten eines Überrollschutzsystems ist an sich bekannt.

So zeigt die DE 100 13 376 C1 ein Überrollschutzsystem mit einem U-förmigen Überrollbügel, der in einer fahrzeugfest angebrachten Kassette aus- und einfahrbar geführt gehaltert ist, wobei die Kassette aus zwei Blechschalen mit jeweils zwei Halbschalen zur Aufnahme von Stützrohren für die Schenkel des Überrollbügels zusammengebaut ist. Der U-förmige Überrollbügel ist dabei mittig radial zweigeteilt, um einen Toleranzausgleich beim Montieren und Einsetzen des Überrollbügels zu gewährleisten. Diese Schrift gibt daher keinen Hinweis in Richtung der Erfindung.

Die DE 203 03 691 U1 zeigt eine Überrollschutzvorrichtung mit einem kastenförmigen Überrollkörper, der in einer fahrzeufest angebrachten Kassette aus- und einfahrbar gehaltert ist, wobei der Überrollkörper als ein- oder mehrschaliges Formteil aus Faserverbundwerkstoff ausgebildet ist. Bei einem zweischaligen Aufbau beispielsweise werden zwei rechteckförmige Schalen unter Bildung eines Profilkörpers übereinander befestigt. Dieser schalige Aufbau hat allein den Zweck, die Versteifung und damit die Knickfestigkeit des Überrollkörpers zu erhöhen, und nicht um die Schalen in der äußeren Kontur individuell entsprechend der geforderten Form, dem geforderten Verlauf und Querschnitt eines Überrollbügels zu gestalten.

Das gleiche gilt auch für den Gegenstand des älteren, nicht vorveröffentlichten Patentes DE 103 49 693 B3 , gemäß dem die übereinander liegenden Schalen des rechteckigen, kastenförmigen Überrollprofilkörpers nicht nur aus Faserverbundkunststoff, sondern auch aus Leichtmetall- oder Stahlblech bestehen können.

Die DE 298 07 322 U1 zeigt einen in Schalenbauweise gefertigten Überrollbügel mit einer im Grundzug ebenen, U-förmigen Konfiguration. In der Basis-Ausbildung besteht der Überrollbügel aus einer sehr breiten, flächigen gerundeten Schale aus Faserverbundkunststoff, oder aus Blech bzw. anderem flächigen Verbundmaterial, in welcher Formstrukturierungen eingeformt sind, um der Schale die nötige Festigkeit zu verleihen. Bei einer speziellen Ausführung ist eine zweite flächige Schale vorgesehen, welche die Rundung der ersten Basisschale überdeckt und mit der Basisschale am Rand verschweißt ist. Sie weist ebenfalls Formstrukturierungen auf und soll die Festigkeit des Überrollbügels erhöhen.

Diese Schrift gibt keine Hinweise auf eine Ausbildung eines rohrförmigen Überrollbügels aus teilrohrförmigen Schalen, um aufgrund der individuellen Verformbarkeit der Schalen eine unterschiedliche Konfiguration zu ermögliche, welche den eingangs genannten Forderungen genügt.

Ausgestaltungen und Weiterbildungen der Erfindung sind in Unteransprüchen gekennzeichnet und ergeben sich auch aus der Figurenbeschreibung.

### Es zeigen:

- Fig. 1: in einer isometrischen Ansicht eine erste Ausführungsform eines zweischalig aufgebauten, U-förmig gerundeten Überrollbügels mit Bügelfuß, dessen Bügelkopfschalen jeweils an den zugehörigen Schalen des Bügelfußes einstückig angeformt sind,
- Fig. 2: eine Explosionszeichnung des Überrollbügels nach Fig. 1 zur Verdeutlichung seines schaligen Aufbaues,
- Fig. 3: eine Längsschnittdarstellung des Überrollbügels entsprechend der Zeichnung nach Fig. 2,
- Fig. 4: eine Vorderansicht des Überrollbügels nach Fig. 1,
- Fig. 5: eine Seitenansicht des Überrollbügels nach Fig. 1 im Schnitt mit Umschäumung und Verstärkungs- bzw. Gummi-/Metallelementen gemäß einer Variante,
- Fig. 6: einen vergrößerten Ausschnitt nach Figur 5 hinsichtlich der Schnittfläche im Bügelkopf,
- Fig. 7: in einer isometrischen Ansicht eine zweite Ausführungsform eines zweischalig aufgebauten, U-förmig gerundeten Überrollbügels mit zugehörigem zweischaligen Bügelfuß, der starr im Bügelfuß befestigt ist (z.B. durch Schweißen), und dessen dreidimensionaler Konturverlauf einen unregelmäßigen Querschnitt und spezielle Formen aufweist,
- Fig. 8: eine Vorderansicht des Überrollbügels nach Fig. 7,
- Fig. 9: eine Seitenansicht eines zweischaligen Überrollbügels mit Umschäumung sowie einen Teilschnitt des Bügelfußes, in welchem nach einer weiteren Ausführungsform ein elastisch verformbares Absorberelement installiert ist,

Die Zeichnungen zeigen in schematisierten Darstellungen ein Überrollschutzsystem für Kraftfahrzeuge mit einem rohrförmigen und dabei U-förmig gerundeten Überrollbügel bzw. Bügelkopf 1, der aus zwei axial geteilten rohrförmigen Schalen 1 a und 1 b zusammengesetzt ist. Diese Bügelschalen bestehen aus einem metallischen Blechwerkstoff, die mit bekannten Kalt- und Warmformverfahren entsprechend der vom Fahrzeughersteller geforderten Soll-Kontur individuell verformt sind. Durch den schaligen Aufbau des Überrollbügels bzw. seines Kopfes, d.h. dadurch, dass die Schalen einzeln vor ihrer Zusammensetzung verformt werden können, ist es auf relativ einfache und wirtschaftliche Weise möglich, einen dreidimensionalen Verlauf der Bügelkontur mit unregelmäßigem Querschnitt, d.h. individuelle Formen der Bügelgeometrie zu schaffen.

Die Schalen werden mit den bekannten Techniken fest miteinander verbunden, z.B. durch Schweißen, Kleben, Nieten, Clinchen (Durchsetzfügen), Löten oder durch eine Kombination dieser Verbindungstechniken. Sie können in bekannter Weise oberflächenbeschichtet und ggf. auch mit einem entsprechenden Kunststoff umschäumt sein.

Durch die erfindungsgemäße Maßnahme ist letztendlich eine modulare Bauweise des Bügels bzw. Bügelkopfes möglich, d.h. daß die Schalen jeweils so ineinander verschachtelt sind, dass die Breite, die Tiefe und die Höhe des Bügels bzw. des Bügelkopfes individuell an die Fahrzeuggegebenheiten angepasst werden können.

Der Bügel bzw. Bügelkopf 1 ist im dargestellten Ausführungsbeispiel nach Fig. 1 mit einem jeweiligen breiten Übergangsabschnitt 1 c einstückig mit einem Bügelfuß 2 verbunden, welcher seinerseits der Anbindung des Bügels an die Fahrzeugkarosse als sogenannter starrer Überrollbügel dient. Dieser Bügelfuß ist über die angedeuteten Befestigungsöffnungen 2 c lösbar mit dem Fahrzeugaufbau verbunden, z.B. mit der Rückwand im Fond eines Cabriolets. Bei den Systemen nach dem Stand der Technik werden dagegen die starr installierten Überrollbügel mit aufwändig gestalteten und zu montierenden Anbauteilen versehen.

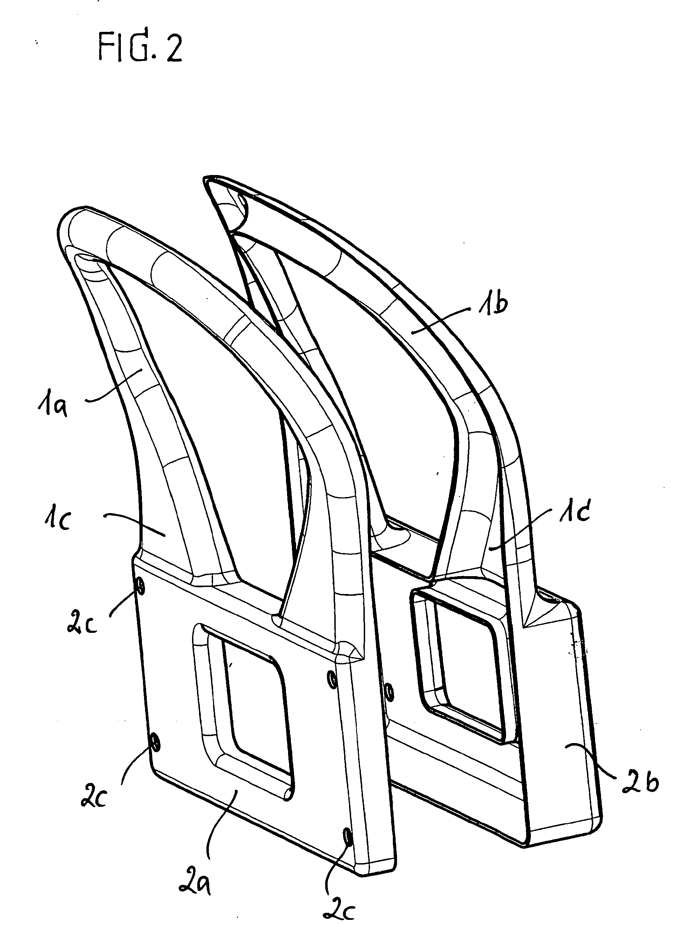

Für eine besonders flexible Gestaltung ist gemäß einer Weiterbildung der Erfindung vorgesehen, dass, wie insbesondere auch die Fig. 2 zeigt, der Bügelfuß 2 in konformer Weise wie der Überrollbügel bzw. sein Überrollkopf selbst aus geformten Schalen 2 a, 2 b aus metallischem Blechwerkstoff besteht, die in der Bügelebene zusammengefügt sind, wobei die jeweilige Schale 2 a bzw. 2 b des Bügelfußes an der zugehörigen Schale 1 a bzw. 1 b des Überrollbügels bzw. seines Überrollkopfes einstückig angeformt ist, d.h. zusammen mit der Bügelkopfschale aus einem gemeinsamen Blechteil verformt wird.

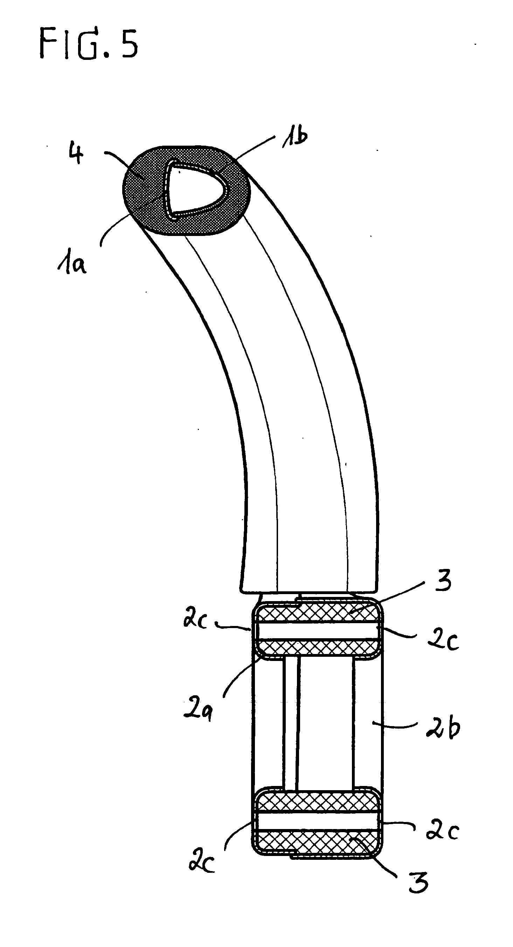

Wie die Fig. 5 zeigt, werden zweckmäßig im Innern der Schalen 2 a, 2 b des Bügelfußes im Bereich der Befestigungslöcher 2 c Distanzstücke 3 angebracht, die verhindern, dass die Schalen 2 a, 2 b unter Last zusammengedrückt werden. Auch können weitere Verstärkungsteile, wie z.B. Verstrebungen, innerhalb der Schalen bzw. im Bereich des Überganges der Bügelschenkel in den Bügelfuß mit untergebracht werden.

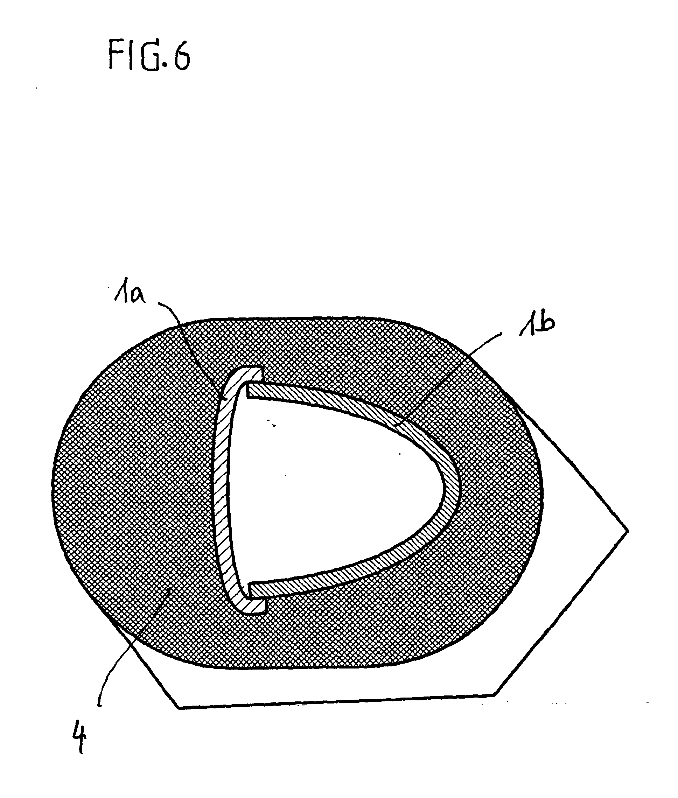

Die Schnittfläche im Bügelkopf der Fig. 5 in Verbindung mit der zugehörigen Ausschnittvergrößerung nach Fig. 6 zeigt eine typische, aber dennoch beispielhafte gewollte geometrische Unterschiedlichkeit der beiden Schalen 1 a, 1 b, im oberen, mit einer Umschäumung 4 versehenen Teil, nämlich eine abgeflachte vordere, dem Kopf des PKW-Insassen zugewandte Schale 1 a und eine rückseitige Schale 1 b mit parabelförmigem Querschnitt. Die abgeflachte Schale ermöglicht es, in dem vorderen Bereich eine stärkere Umschäumung vorzusehen, was die Verletzungsschwere im Crash-Fall mindert. Die Abflachung kann dabei partiell oder ganzflächig sein.

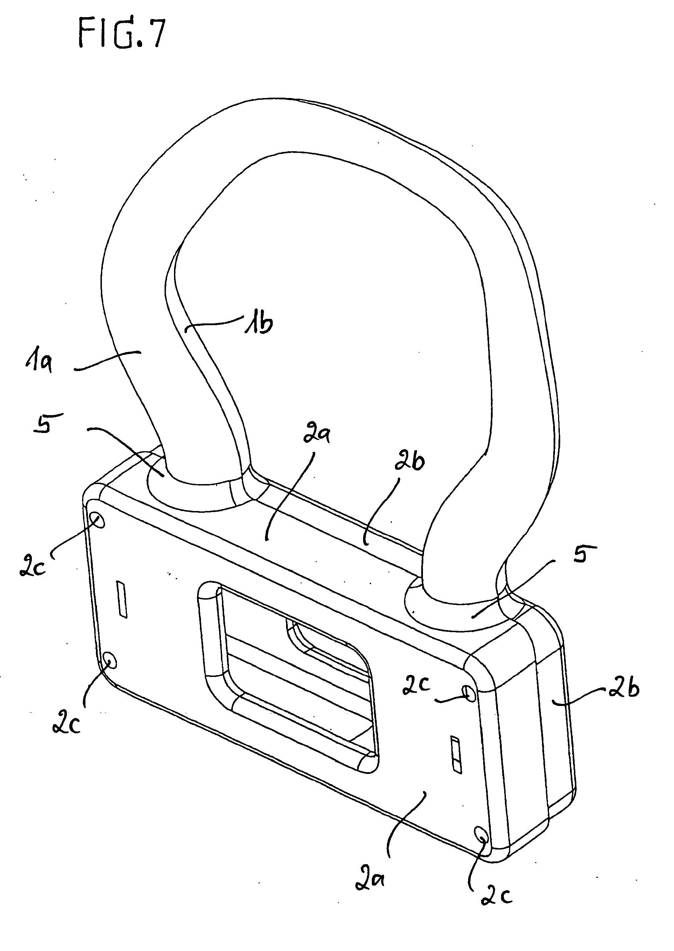

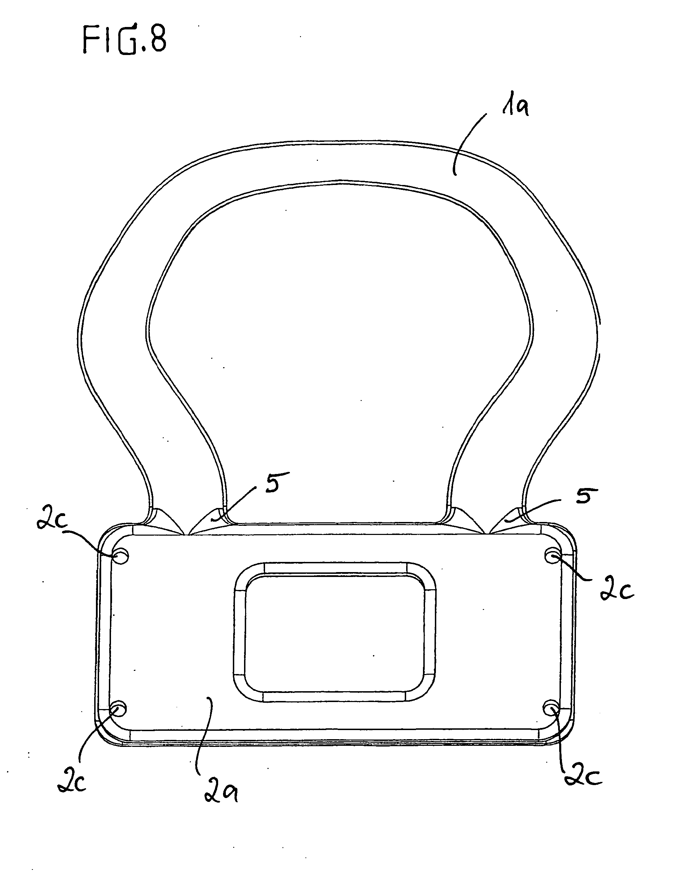

Die Figuren 7 und 8 zeigen eine weitere Ausführungsform nach der Erfindung, bei der im Gegensatz zu der Ausführungsform nach der Fig. 1 die Bügelschalen 1 a, 1 b getrennt von den Bügelfußschalen 2 a, 2 b verformt und miteinander verbunden werden. Der zusammengesetzte Überrollbügel 1 wird dann in entsprechende Öffnungen in den zusammengesetzten Bügelfuß eingesetzt und in diesem befestigt, z.B. durch Schweißen, was in den Figuren 7, 8 durch eine Schweißnaht 5 symbolisch dargestellt ist.

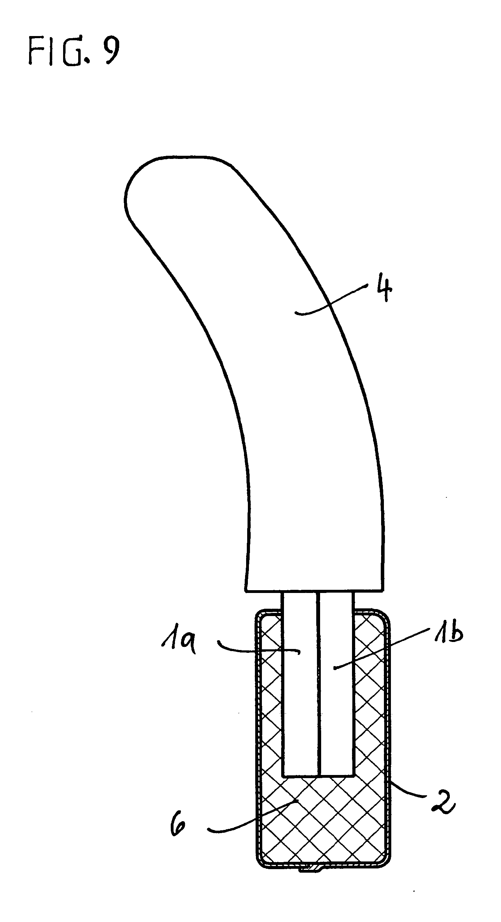

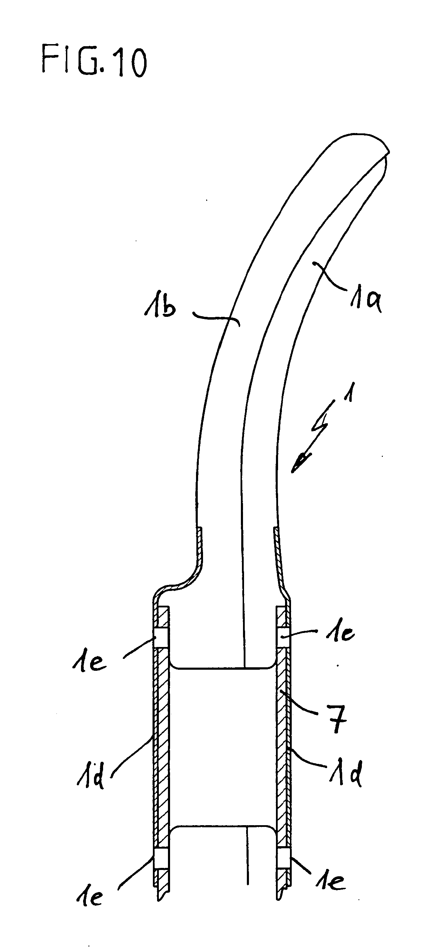

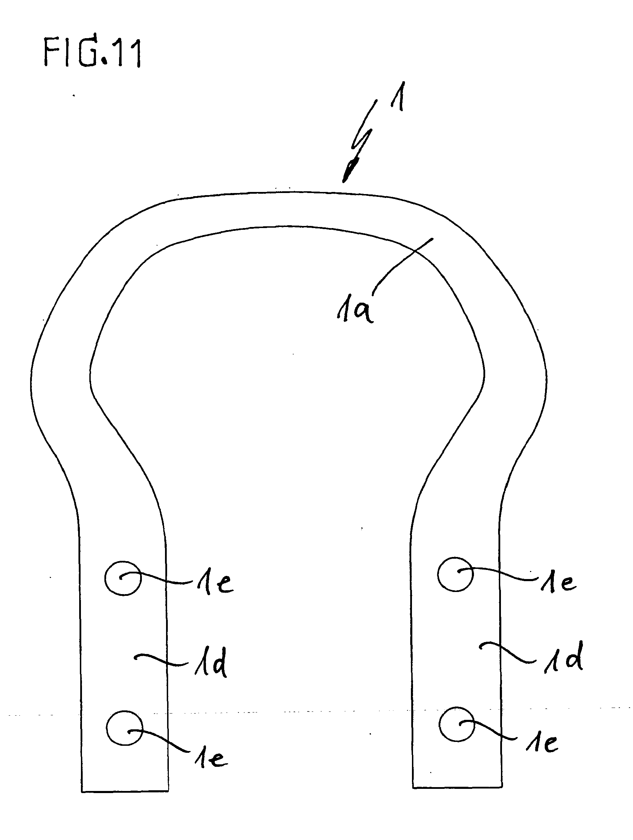

Die Fig. 9 zeigt in einer weiteren Ausführungsform einen zweischaligen, mit einer Umschäumung 4 versehenen Überrollbügel, dessen Bügelschenkel in konventioneller Weise in den Bügelfuß 2 eingeführt und dort befestigt sind, wobei im "Übergangsbereich" ein elastisch verformbares Absorberelement 6 in Form einer Gummi/Metallverbindung vorgesehen ist, so dass der Überrollbügel im Fuß bei Belastung etwas nachgeben kann.

Denkbar sind auch entsprechend Fig. 5 Gummi-/Metallelemente, welche die Schalen gegeneinander abstützen und die sogleich Bohrungen für die Verschraubung mit der Karosse aufweisen. In dem dargestellten Ausführungsbeispiel ist ein zweischaliger Aufbau des Überrollbügels und des Anbauteiles, d.h. des Bügelfußes, vorgesehen. Prinzipiell können auch jeweils mehr als zwei Schalen vorgesehen sein.

## Patentansprüche

1. Überrollschutzsystem für Kraftfahrzeuge mit einem U-förmigen Überrollkörper, der insgesamt, d.h. im Bereich des Kopfes und der sich daran anschließenden Schenkel aus zwei etwa längs der Mittelebene des Überrollkörpers miteinander verbundenen, geformten Blechhalbschalen (1 a, 1 b) besteht, **dadurch gekennzeichnet, dass** die Blechhalbschalen (1a, 1b) in der Bügelebene zusammengefügt sind und zur Befestigung des Überrollkörpers an der Karosserie ein Fußteil (2) vorgesehen ist, das in gleicher Weise aus miteinander in der Bügelebene verbundenen geformten Blechhalbschalen (2 a, 2 b) besteht.

2. Überrollschutzsystem nach Anspruch 1, **dadurch gekennzeichnet, dass** die vorderen und hinteren Blechhalbschalen des Kopfes, der Schenkel und des Fußteils (1 a, 2 a bzw. 1 b, 2 b) aus einstückig geformten Blechteilen bestehen.

3. Überrollschutzsystem nach Anspruch 1, **dadurch gekennzeichnet, dass** ein gesondertes Fußteil (2 a, 2 b) vorgesehen ist, in das die Schenkel des Überrollkörpers eingesteckt und in dem sie befestigt sind.

4. Überrollschutzsystem nach Anspruch 3, **dadurch gekennzeichnet, dass** zwischen den Blechhalbschalen (2 a, 2b) des Fußteils und den Schenkeln des Überrollkörpers ein elastisch verformbares Absorberelement (6) angeordnet ist.

5. Überrollschutzsystem nach Anspruch 3, **dadurch gekennzeichnet, dass** zwischen den Blech-Halbschalen (2 a, 2b) des Fußteils stützende Gummi-Metallelemente (3) angeordnet sind.

6. Überrollschutzsystem nach Anspruch 5, **dadurch gekennzeichnet, dass** die stützenden Gummi-Metallelemente (3) Befestigungslöcher (2 c) aufweisen.

7. Überrollschutzsystem nach Anspruch 1, **dadurch gekennzeichnet, dass** die Blech-Halbschalen (1 a, 1 b; 2 a, 2 b) oberflächen-beschichtet sind.

8. Überrollschutzsystem nach Anspruch 1, **dadurch gekennzeichnet, dass** die zusammengesetzten Blechhalbschalen (1 a, 1 b) des Überrollkörpers (1) mit einem Kunststoffmantel (4) umschäumt sind.

## Claims

1. A roll-over protection system for motor vehicles, having a U-shaped roll-over body which overall, i.e. in the region of the head and the adjoining arms, comprises two shaped sheet-metal half-shells (1a, 1b) which are connected to one another approximately along the central plane of the roll-over body, **characterised in that** the sheet-metal half-shells (1a, 1b) are joined together in the plane of the roll bar and, in order to fasten the roll-over body to the bodywork, a foot part (2) is provided which likewise comprises shaped sheet-metal half-shells (2a, 2b) which are connected to one another in the plane of the roll bar.

2. A roll-over protection system according to claim 1, **characterised in that** the front and rear sheet-metal half-shells of the head, the arms and the foot part (1a, 2a and 1b, 2b) comprise sheet-metal parts formed in one piece.

3. A roll-over protection system according to claim 1, **characterised in that** a separate foot part (2a, 2b) is provided, into which the arms of the roll-over body are inserted and in which they are fastened.

4. A roll-over protection system according to claim 3, **characterised in that** an elastically deformable absorber element (6) is arranged between the sheet-metal half-shells (2a, 2b) of the foot part and the arms of the roll-over body.

5. A roll-over protection system according to claim 3, **characterised in that** supporting rubber/metal elements (3) are arranged between the sheet-metal half-shells (2a, 2b) of the foot part.

6. A roll-over protection system according to claim 5, **characterised in that** the supporting rubber/metal elements (3) have fastening holes (2c).

7. A roll-over protection system according to claim 1, **characterised in that** the sheet-metal half-shells (1a, 1b; 2a, 2b) are surface-coated.

8. A roll-over protection system according to claim 1, **characterised in that** a plastics covering (4) is foamed around the assembled sheet-metal half-shells (1a, 1b) of the roll-over body (1).

## Revendications

1. Système d'arceau de sécurité pour véhicules automobiles, avec un corps d'arceau en forme de U, composé globalement, c'est-à-dire dans la zone de la tête et des branches s'y raccordant, de deux demi-coques en tôle (1a, 1b) formées, reliées ensemble à peu près le long du plan médian du corps d'arceau, **caractérisé en ce que** les demi-coques en tôle (1a, 1b) sont assemblées dans le plan d'arceau, et, pour assurer la fixation de l'arceau à la carrosserie, une partie de pied (2), composée de manière identique de demi-coques en tôle (2a, 2b) formées, reliées ensemble dans le plan d'arceau, est prévue.

2. Système d'arceau de sécurité selon la revendication 1, **caractérisé en ce que** les demi-coques en tôle avant et arrière de la tête, des branches et de la partie de pied (1a, 2a, respectivement 1b, 2b) sont composées de pièces en tôle formée d'une seule pièce.

3. Système d'arceau de sécurité selon la revendication 1, **caractérisé en ce qu'**une partie de pied (2a, 2b) séparée est prévue, dans laquelle les branches du corps d'arceau sont enfichées et dans laquelle elles sont fixées.

4. Système d'arceau de sécurité selon la revendication 3, **caractérisé en ce qu'**un élément absorbant (6) déformable élastiquement est disposé entre les demi-coques en tôle (2a, 2b) de la partie de pied et les branches du corps d'arceau.

5. Système d'arceau de sécurité selon la revendication 3, **caractérisé en ce que** des éléments en métal-caoutchouc (3), à effet de soutien, sont disposés entre les demi-coques en tôle (2a, 2b) de la partie de pied.

6. Système d'arceau de sécurité selon la revendication 5, **caractérisé en ce que** les éléments en métal-caoutchouc (3) à effet de soutien présentent des trous de fixation (2c).

7. Système d'arceau de sécurité selon la revendication 1, **caractérisé en ce que** les demi-coques en tôle (1a, 1b ; respectivement 2a, 2b) portent un revêtement de surface.

8. Système d'arceau de sécurité selon la revendication 1, **caractérisé en ce que** les demi-coques en tôle (1a, 1b) assemblées du corps d'arceau (1) sont enrobées d'un moussage avec une enveloppe en matière synthétique (4).
